# EUROPEAN PATENT SPECIFICATION

(11) **EP 4 480 832 B1**
(45) Date of publication and mention of the grant of the patent: **13.05.2026**
(21) Application number: 24183885.3
(22) Date of filing: 24.06.2024
(51) Int. Cl.: B64G 1/26, B64G 1/28, B64G 1/36, B64G 3/00

(54) **SPACE OBJECT BEACON**
RAUMOBJEKTBAKE
BALISE D'OBJET SPATIAL

(30) Priority: 22.06.2023 EP 23181064
(43) Date of publication of application: 25.12.2024
(73) Proprietor: Beyond Debris Sàrl, 2000 Neuchâtel (CH)
(72) Inventor: VIVES VALLDURIOLA, Gerard, 2000 Neuchâtel (CH)
(74) Representative: Piticco, Lorena

(56) References cited:
- JP-A- 2000 128 095
- US-A1- 2010 228 480
- US-A1- 2019 210 746
- US-A1- 2021 011 148
- XU RONG ET AL: "Algorithms for space-based anomaly detection of GEO objects", ADVANCES IN SPACE RESEARCH, vol. 64, no. 2, 27 April 2019 (2019-04-27), pages 451 - 464, XP085707214, ISSN: 0273-1177, DOI: 10.1016/J.ASR.2019.04.004
- MEHRHOLZ D ET AL: "DETECTING, TRACKING AND IMAGING SPACE DEBRIS", ESA BULLETIN, ESA SCIENTIFIC AND PUBLICATIONS BRANCH, NOORDWIJK, NL, no. 109, 1 February 2002 (2002-02-01), pages 128 - 134, XP001102600, ISSN: 0376-4265

## Description

### TECHNICAL FIELD

The present invention relates a space object beacon according to the preamble of claim 1. Such a space object beacon comprises a computer program for identifying, determining, and tracking positions of a space object to which it is attached.

### PRIOR ART

Such a space object beacon is disclosed in US2019/210746A1 and starts from the assumption that there are more and more space objects in orbits above earth which create increasing space traffic issues. Such space objects can be space capsules, spaceplanes, space stations, satellites, rocket stages, engines, probes, drones, etc. It is noted that existing approaches to solve these issues rely on remote sensing techniques that require pre-existing object information (e.g., launch, customer/owner, spacecraft features, orbit and the like) which is problematic in view of the limited number of active sensor stations located around the world, which limits the ability of these systems to provide frequently updated space object positions. The method according to US 2019/210746 A1 uses an independent, self-powered, commandable beacon that is placed upon a space object and transmits a signal composed of a unique identification code, along with meta-data generated by the beacon and data messages provided by the host space object. Such meta-data can be receive time, frequency and duration as well as sensor data, such as body rates, accelerations, and like, which may aid in space object position determination and provide more in-depth characterization of the host space object, which may not be obtained by remote sensing.

US2010/228480A1 discloses a similar satellite-tracking system comprising: a plurality of beacon devices located on a corresponding plurality of space objects, each beacon device including a location sensor and configured to transmit location information, a database that includes a plurality of sets of customer parameters, each customer being associated with a corresponding space object, each set of customer parameters including one or more intended recipient of messages associated with the corresponding space object, a processing centre that is configured to receive the location information from the plurality of beacon devices to determine the location of each corresponding space object, and a message generator that is configured to selectively generate messages based on the set of customer parameters associated with each corresponding space object, and to send the generated messages to the corresponding intended recipients of the messages.

JP 2000/128095 A discloses a highly reliable and low-cost attitude control device for an artificial satellite. It provides control signals for thrusters to influence a detected angular error in the X-axis and Y-axis of the attitude ov the artificial satellite. This control is always achieved in connection with a ground station and computer on the ground providing a necessary feedback to the control unit at the artificial satellite.

### SUMMARY OF THE INVENTION

Based on this prior art it is an object of the invention to provide a space object beacon allowing for obtaining more precise information for the prediction of the further flight path without continuous supervision of the space object connected with the beacon.

This object is solved with a space object beacon to be placed on a space object comprising a power supply, a microprocessor, a memory and an antenna and which further comprises at least one rotational movement detecting sensor delivering orientation data for determining the current tumble rate of said space object with the features of claim 1. Such a beacon incorporates inter alia a sensor configured to determine the rotation axis of a possibly tumbling space object to which the beacon is attached. The space object beacon comprises close-range detection sensors and/or receiving means for position and movement data in relation to an incoming further space object, possibly approaching on a collision course. These means allow the microprocessor of the space beacon to determine if such a collision between the space object and the further space object is to be expected. Additionally, the space beacon is equipped with at least one propulsion unit and is configured to calculate a collision avoiding path for the space object where it is attached to and to control the propulsion units to navigate the space object on said collision avoiding path. It is possible that as long as the space object where the beacon is attached to is functional, that the propulsion unit(s) mentioned are units originally attached to the space object and at least now controlled by the space beacon.

It is a further advantage of the invention that the space object with the beacon according to the invention attached to it is capable and suited to gather direct information on collisions of said space object with other space objects in connection with the growing relevance of the Kessler syndrome.

Space objects which are not stabilized or are no longer stabilized, e.g. because of drive issues or reaching end of life of the power supply tend to rotate. Such a rotation of a space object, when the angular velocity vector or the angular momentum vector is not close to the axis of highest or lowest inertia of the space object, is called "tumbling". Tumbling in the exosphere or thermosphere influences the flight path of space objects entering and moving in these distances from the Earth in a non-predictable way. Prior art is using monitoring the light reflection of such space objects over time to estimate the tumbling properties of such space objects. Obtaining tumbling information through monitoring the flight path of a space object over time is time and resource consuming in view of the high number of space objects to be monitored in orbit.

A beacon can be placed on everything that can or will become a space debris object in future, either due to end of life or accident or malfunction. It is also possible to place such a space object beacon on non-man-made celestial bodies, such as meteors or meteorites.

In one embodiment the microprocessor is configured to calculate the current tumble rate of said space object based on the orientation data from the rotational movement detecting sensor. Then the space object beacon comprises a transmitter configured to transmit the determined tumble rate of said space object to a ground station. The data handling in the control unit comprising a microprocessor in the space object beacon has the advantage that only results are to be transmitted enabling a faster response time and/or to transmit the development of the tumbler rate over time, e.g. since the last contact with the beacon.

In another embodiment the microprocessor is configured to compile the orientation data of the at least one rotational movement detecting sensor. Then, the space object beacon comprises a transmitter configured to transmit the compiled orientation data relating to said tumble rate of said space object to a ground station permitting said ground station to make the calculation determining the tumbler rate. With larger data transmission, it is also possible to receive data to determine the tumbler rate over time.

The measurements of the rotational movement detecting sensor are commandable through a receiver, i.e. are only performed upon contact from a ground station with the beacon to reduce power consumption on the beacon.

The measurements of the rotational movement detecting sensor can also be made periodically and either transmitted to a ground station upon request through a request signal received from a ground station or stored for a periodically intended later transmission to a ground station.

The receiver and transmitter of the transceiver are prefererredly RF-based or the transfer can be based on light signals, e.g. by laser.

Although the communication with a ground station can be carried out directly, it is also possible that the space object beacon is targeting and being targeted for communication by a relay satellite.

The space object beacon can further comprise a global navigation satellite system (GNSS) based positioning sensor to determine its own position. Then the microprocessor and memory can use the obtained data to correlate the attitude behaviour of the space object with its position and timing.

The space object beacon can further comprise a camera directed to a direction opposite to the space object it is attached to. Then the microprocessor and memory are configured as a star tracker for determining the position and orientation of the space object beacon in space. The memory stores images or 2D-data of relative star constellations and the microprocessor is configured to determine said position and orientation through comparing photos made by the camera with this stored information.

The space object beacon comprises an accelerometer sensor for determining deceleration information relating to the space object beacon to calculate air drag deceleration data on the space object the space object beacon is attached to. This accelerometer sensor can also be part of the rotational movement detecting sensor.

Such star related measurements and/or acceleration based measurements can be combined with a microprocessor configured to determine speed, position and orientation of the space object beacon over time. This provides the advantage to determine and calculate the effect of impacts from small debris in space onto the space object where the space beacon is attached to relating to the trajectory (i.e. coordinates on the orbit comprising their altitude).

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematical view of the surface of the earth with a monitoring station and a space object beacon attached to a space object;
- Fig. 2: shows a schema of components of the space object beacon according to an embodiment of the invention as shown in Fig. 1, and
- Fig. 3: shows a schematical view of a space object as from Fig. 1 with a further space object in the vicinity.

### DESCRIPTION OF PREFERRED EMBODIMENTS

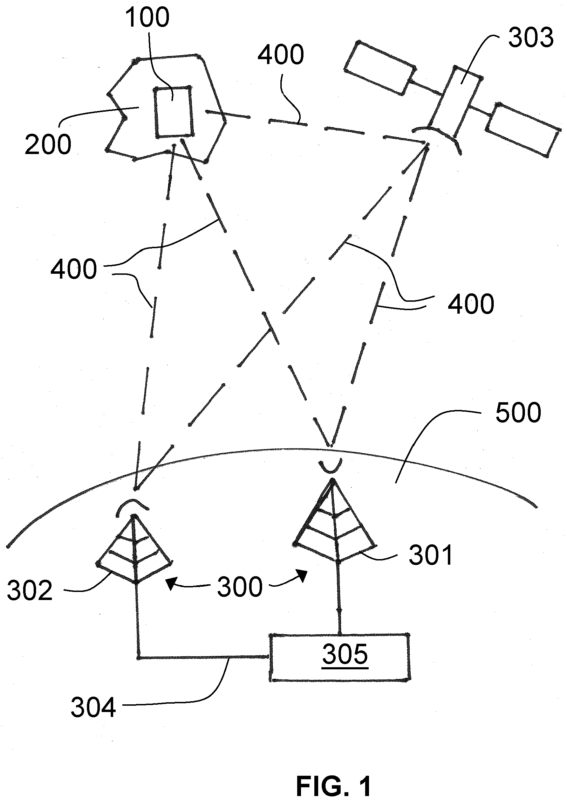

Fig. 1 illustrates an example of a space object beacon 100 according to an embodiment of the invention in the context of a system for detecting and tracking space objects. The schematically represented space object beacon 100 is mounted and attached on a space object 200 which is shown in Fig. 1 with the portion on which the space object beacon 100 is mounted. The space object 200 can be a part of a satellite, part of a rocket body or any other portion of a space object. It can also be a debris remaining after disintegration of another space object. On the ground of Earth 500 is provided at least one ground station 300 which might be either an active ground station 301 (Tx and optionally Rx, i.e. transmission and reception) or a passive ground station 302 which is/are connected via wire-bound or RF connections 304 to a control centre 305 configured to receive, process and prepare data for output. It is possible that the space object 200 initially communicates with a relay satellite 303 which provides on the one hand the reception of communication similar to the direct contact to a ground station 301 or 302 before transmitting the received data to the control centre 305 via the ground station 301 or 302 and on the other hand, after the reception of communication from the control centre 305, transmitting such communication to the space object beacon 100 on the space object 200.

The ground stations 301, 302, the relay satellite 303 and the space object beacon 100 are using electromagnetic waves and especially radio frequency signals for communication, here visualized with dashed connection lines 400.

The space object beacon 100 can comprise a star tracker and / or a satellite positioning sensor. A star tracker comprises an imaging sensor, realized as photocells or a camera, taking images and determines the positions of stars. As the positions of many stars have been measured by astronomers to a high degree of accuracy, a star tracker on the space object beacon 100 is then used to determine the orientation of the space beacon with respect to the stars. In order to do this, the star tracker takes one or more images of the stars, measure their apparent position in the reference frame of the space beacon, and identify the stars so their position can be compared with their known absolute position from a star catalogue. For this, the processor of the space object beacon identifies stars by comparing the pattern of observed stars with the known pattern of stars in the sky which are stored in a database in a memory connected to the microprocessor 102.The satellite positioning sensor is any sensor being able to determine the position of the satellite in view of a GNSS. The sensor uses radiofrequency signals sent by a satellite from one or several GNSS (Global Navigation Satellite System) constellations to determine the position, velocity and time (PVT) of the sensor at each performed measurement. With several PVT measurements the microprocessor in the beacon can determine not only its position at every given time but also determine the orbit.

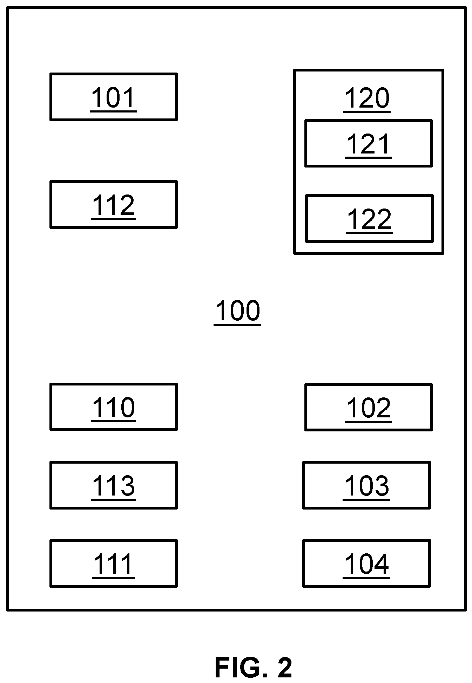

Fig. 2 shows an example of the space object beacon 100 according to an embodiment of the invention as shown in Fig. 1. The space object beacon 100 comprises a power supply 101, a microprocessor 102 and an antenna 103 for the communication with ground stations 301, 302 and/or the relay satellite 303 over a transceiver 120, comprising a receiver 121 and a transmitter 122. The microprocessor 102 is connected with RAM and ROM. The space object beacon 100 comprises also comprises at least one rotational movement detecting sensor 110 adapted to determine the current tumble rate of said space object 200. Such a sensor 110 can comprise inter alia an accelerometer, a velocity sensor and a gyro sensor.

The space object beacon 100 may have a unique identifier to be transmitted via the antenna to a ground station 300 for identification of the monitored beacon 100 and as such of the monitored space object 200. The main function of the space object beacon 100 is the determination of the tumble rate based on the sensor values of the rotational movement detecting sensor of the space object beacon 100. The sensor values of the sensors are processed in the microprocessor 102 of the space object beacon 100 calculating the tumble rate of the space object 200 to which the space object beacon 100 is attached. The tumble rate allows to determine more precise information for the prediction of the further flight path of the space object 200.

The space object beacon 100 has a power supply 101 which can comprise a battery having enough power to supply energy to the space object beacon 100 for the space time of the space object 200, i.e. the functional lifetime of the space object 200 plus the maximum remaining space time of the space object 200 after going out of service. The power supply can also be connected to the space object itself to provide energy as long as it remains functional. Batteries or photovoltaic systems can be included too in the space object beacon 100.

The calculation of the tumble rate can be performed continuously, in predetermined time periods or upon contacting the space object beacon 100. In the first two alternatives the calculated values can be transmitted to the ground station 300 in predetermined time periods, whereas in the third alternative, an active ground station 302 contacts the space object beacon 100 and activates the transmission of the tumble rate. It is also possible that the space object beacon 100 determines the rotational movement detecting sensor values upon reception of such an activation signal, i.e. the transmission of a ground station 302 triggers the space beacon 100 to make the measurement, calculation and transmission of obtained values.

In a further embodiment of the space object beacon 100, the transmission to the ground station 300 only comprises said sensor values as such based on which the control centre 305 is able to calculate the current tumble rate. In other words, the tumble calculation part of the microprocessor 102 is within the control centre 305 being connected to the ground stations 301 and/or 302 via connections 304. But since the values are sufficient for a direct and unambiguous calculation with a time delay relating to the distance between the communication units, the values are available quasi-instantaneous.

All these alternatives allow for a direct determination of further flight path information of a space object 200 equipped with such a space object beacon 100, since no long monitoring time of any such a space object 200 equipped with (at least one) a space object beacon 100 is necessary to predict the flight path of that space object 200 in the immediate future which is impacted in any near earth orbit by the influence of the remaining atmosphere, especially thermosphere and exosphere, in such near earth orbits. For this air drag, providing a further deceleration factor, can also be included through determining measurements of an acceleration sensor 113 which can be part of the rotational movement detecting sensor.

As mentioned it is possible to provide and attach several space object beacons 100 on a single space object entity in order to be able to monitor the tumble rate of space debris if a space object disintegrates into two or more space debris parts for any reason. It is possible to rely on a power supply provided by the space object 200 itself for the functioning time of the space object 200, but it is necessary that a specific beacon internal power supply 101 is present for the intended maximum monitoring time of the space object or part of space object 200 at which the space object beacon 100 is attached.

The space object beacon 100 can also comprise further sensors as e.g. to measure vibrations etc. or breaking into pieces of the space object which are also transferred in sequence to the tumbler rate to a control centre 305. Or such additional measurement values are overwritten as long as no predefined threshold of movement change is reached. Such predefined threshold of movement change is an indication that the space object has at least partly disintegrated or lost parts and then the last period of stored values are transmitted to the control centre 305 enabling it to draw conclusions relating to the reasons for such a failure. Such a further sensor configured to determine the breaking into pieces can comprise a plurality of presence sensors being in connection, via wire or wireless, with the control unit of the space object beacon 100, wherein the control unit determine their presence or their lack of presence. If the space object is breaking up with a debris part comprising one of this plurality of presence sensors, the connection with this presence sensor is lost, either because the wire connection is destroyed or the wireless connection is no longer in contact in view of too large distance or changed relative orientation.

The space object beacon 100 can also comprise a camera 111 which can be used to determine position and orientation of the space object 200 directly, since such a camera 111 can be attached to the space object beacon 100 to look at the stars above Earth 500 and is connected with the microprocessor 102 to compare such images taken with the position of stars in existing configurations, which is the function of a space tracker.

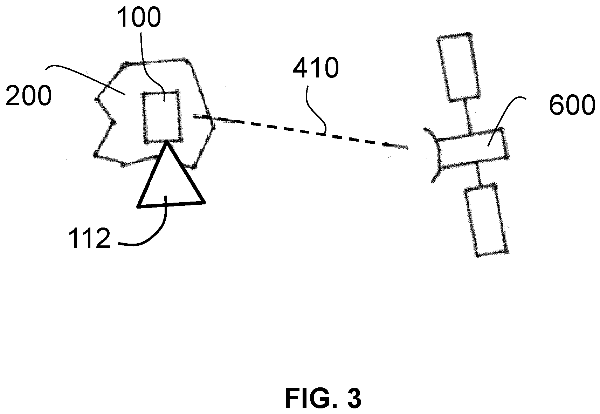

Fig. 3 shows a schematical view of a space object 200 as shown in Fig. 1 with a further space object 600 in the vicinity. Space object 200 comprises a space object beacon 100 with a thruster or inertial and propulsion unit 112.

The embodiment of Fig. 3 can be present in two versions that are compatible with each other and can therefore also form a third embodiment with the combined features.

The space object beacon 100 is configured to detect space objects 600 in its vicinity. This can be done by detecting such space objects 600 through visual observation, obtaining knowledge about such space objects from an exterior source or by detecting signals receiving from said other space object. Such signals can be received radar based signals reflected by the other object or directly captured transmissions from the other space object. Another way is for the space object beacon to periodically transmit a short message to its surroundings informing other space objects in the vicinity about its position and orbit to prevent them from entering into collision. The reference numeral 410 is used to show the further transmission line of information of presence. This transmission has a development over time which can be used to calculate the development of the encounter and if a collision is likely, possible or will not happen.

The space object 200 with the beacon 100 generates data of such encounters. If the other space object 600 is not as shown in Fig. 3 a large object but just a very small debris which might even not be detected when it approaches but its presence is only noticed if a collision occurs which changes to some measurable extent the position and orientation data of the space beacon 100, then the space object 200 with the beacon 100 is able to accumulate data relatively to such events. Such data is especially related to the probability of such events in view of the current cross-sectional area in the trajectory at the orbit height over ground; which is currently not available beside theoretical calculation without knowledge of specific trajectories.

This determination of approach of a further space object 600 is combined with the use of thrusters 112 or inertial and propulsion units to either change the trajectory of the space object 200 to avoid a collision or to rotate the space object 200 into a position so that a protected area faces the incoming debris 600 like a baffle plate, which is of course only advisable if such a debris is very small compared to the space object 200 with the beacon 100.

### LIST OF REFERENCE SIGNS

- 100: space object beacon
- 101: power supply
- 102: microprocessor
- 103: memory
- 104: antenna
- 110: rotational movement detecting sensor
- 111: camera
- 112: inertial and propulsion unit
- 113: acceleration sensor
- 120: transceiver
- 121: receiver
- 122: transmitter
- 200: space object
- 300: ground station (general)
- 301: active ground station (Tx and Rx)
- 302: passive ground station (only Rx)
- 303: relay satellite
- 304: connection
- 305: control centre
- 400: communication line
- 410: communication line
- 500: Earth
- 600: further space object

## Claims

1. A space object beacon (100) to be placed on a space object (200), comprising a power supply (101), a microprocessor (102), a memory (103) and an antenna (104), further comprising at least one rotational movement detecting sensor (110) delivering orientation data for determining the current tumble rate of said space object (200), close-range detection sensors and/or receiving means for position and movement data in relation to an incoming further space object (600) possibly approaching on a collision course, **characterised in that** the space object beacon comprises at least one propulsion unit (112) to alter either orientation, tumbling rate, orbit or a combination thereof, of the space object attached to, wherein the space object beacon (100) is configured to determine if such a collision between the space object (200) and the further space object (600) is to be expected and to calculate a collision avoiding path for the space object (200) where it is attached to and to control the at least one propulsion unit (112) to navigate the space object (200) on said collision avoiding path.

2. The space object beacon (100) according to claim 1, wherein the microprocessor (102) is configured to calculate the current tumble rate of said space object (200) based on the orientation data from the rotational movement detecting sensor (110) and wherein the space object beacon (100) comprises a transmitter (122) configured to transmit the determined tumble rate of said space object (200) to a ground station (300; 301, 302).

3. The space object beacon (100) according to claim 1, wherein the microprocessor is configured to compile the orientation data of the at least one rotational movement detecting sensor (110) and wherein the space object beacon (100) comprises a transmitter (122) configured to transmit the compiled orientation data relating to said tumble rate of said space object (200) to a ground station (300; 301, 302).

4. The space object beacon (100) according to claim 2 or 3, wherein the measurements of the rotational movement detecting sensor (110) are commandable through a receiver (121).

5. The space object beacon (100) according to claim 4, wherein the receiver (121) and transmitter (122) of the transceiver (120) are RF-based or transfer based on light signals.

6. The space object beacon (100) according to claim 2 or 3, wherein the rotational movement detecting sensor (110) is configured to make periodical measurements and the microprocessor is configured to receive signals relating to said measurements from the rotational movement detecting sensor (110) to either transmit them to a ground station (300) upon request through a request signal received from a ground station (300) or store them for a periodically intended later transmission to a ground station (300).

7. The space object beacon (100) according to any one of claims 1 to 6, wherein the space object beacon (100) is configured to carry out communication with a ground station (300) via a relay satellite (303).

8. The space object beacon (100) according to any one of claims 1 to 7, further comprising a camera (111) and wherein the microprocessor (102) and memory (103) are configured as a star tracker for determining the position and orientation of the space object beacon (100) in space.

9. The space object beacon (100) according to any one of claims 1 to 8, comprising an accelerometer sensor (113) for determining deceleration information relating to the space object beacon (100), especially to calculate air drag deceleration data on the space object (200) the space object beacon (100) is attached to.

10. The space object beacon (100) according to claim 8 or 9, wherein the microprocessor is configured to determine speed, position and orientation of the space object beacon over time.

11. The space object beacon (100) according to any one of claims 1 to 10, comprising an GNSS receiver and wherein the microprocessor (102) is configured for determining the position and orientation of the space object beacon (100) in space based on received GNSS signals.

## Patentansprüche

1. Weltraumobjektbake (100) zur Anbringung an einem Weltraumobjekt (200), umfassend eine Stromversorgung (101), einen Mikroprozessor (102), einen Speicher (103) und eine Antenne (104), ferner umfassend mindestens einen Rotationsbewegungssensors (110), der Orientierungsdaten zur Bestimmung der aktuellen Taumelrate des Weltraumobjekts (200) liefert, sowie Nahbereichssensoren und/oder Empfangsmittel für Positions- und Bewegungsdaten in Bezug auf ein sich näherndes weiteres Weltraumobjekt (600), das sich möglicherweise auf Kollisionskurs befindet, **dadurch gekennzeichnet, dass** die Weltraumobjektbake mindestens eine Antriebseinheit (112) umfasst, um entweder die Ausrichtung, die Taumelrate, die Umlaufbahn oder eine Kombination davon des daran befestigten Weltraumobjekts zu verändern, wobei die Weltraumobjektbake (100) derart ausgebildet ist, dass sie ermittelt, ob eine solche Kollision zwischen dem Weltraumobjekt (200) und dem weiteren Weltraumobjekt (600) zu erwarten ist, und einen kollisionsvermeidenden Kurs für das Weltraumobjekt (200), an dem es angebracht ist, zu berechnen und die mindestens eine Antriebseinheit (112) so zu steuern, dass das Weltraumobjekt (200) auf diesem kollisionsvermeidenden Kurs navigiert wird.

2. Weltraumobjektbake (100) gemäss Anspruch 1, wobei der Mikroprozessor (102) so konfiguriert ist, dass er die aktuelle Taumelrate des genannten Weltraumobjekts (200) auf der Grundlage der Orientierungsdaten des Rotationsbewegungssensors (110) zusammenstellt, und wobei die Weltraumobjektbake (100) einen Sender (122) umfasst, der so konfiguriert ist, dass er die ermittelte Taumelrate des Weltraumobjekts (200) an eine Bodenstation (300; 301, 302) überträgt.

3. Weltraumobjektbake (100) gemäss Anspruch 1, wobei der Mikroprozessor so konfiguriert ist, dass er die Orientierungsdaten des mindestens einen Rotationsbewegungssensors (110) zusammenstellt, und wobei die Weltraumobjektbake (100) einen Sender (122) umfasst, der so konfiguriert ist, dass er die zusammengestellten Orientierungsdaten, die sich auf die Taumelrate des Weltraumobjekts (200) beziehen, an eine Bodenstation (300; 301, 302) überträgt.

4. Weltraumobjektbake (100) gemäss Anspruch 2 oder 3, wobei die Messungen des Rotationsbewegungssensors (110) über einen Empfänger (121) steuerbar sind.

5. Weltraumobjektbake (100) gemäss Anspruch 4, wobei der Empfänger (121) und der Sender (122) des Transceivers (120) RF-basiert sind oder auf der Übertragung von Lichtsignalen beruhen.

6. Weltraumobjektbake (100) gemäss Anspruch 2 oder 3, wobei der Rotationsbewegungssensor (110) derart ausgebildet ist, dass er periodische Messungen durchführt, und der Mikroprozessor so konfiguriert ist, dass er Signale, die sich auf diese Messungen beziehen, vom Rotationsbewegungssensor (110) empfängt, um sie entweder auf Anfrage über ein von einer Bodenstation (300) empfangenes Anforderungssignal an eine Bodenstation (300) zu übertragen oder sie für eine periodisch vorgesehene spätere Übertragung an eine Bodenstation (300) zu speichern.

7. Weltraumobjektbake (100) gemäss einem der Ansprüche 1 bis 6, wobei die Weltraumobjektbake (100) derart ausgebildet ist, dass sie die Kommunikation mit einer Bodenstation (300) über einen Relais-Satelliten (303) durchführt.

8. Weltraumobjektbake (100) gemäss einem der Ansprüche 1 bis 7, die ferner eine Kamera (111) umfasst und wobei der Mikroprozessor (102) und der Speicher (103) als Sternenverfolger zur Bestimmung der Position und Ausrichtung der Weltraumobjektbake (100) im Weltraum konfiguriert sind.

9. Weltraumobjektbake (100) gemäss einem der Ansprüche 1 bis 8, umfassend einen Beschleunigungssensor (113) zur Bestimmung von Verzögerungsinformationen bezüglich der Weltraumobjektbake (100), insbesondere zur Berechnung von Luftwiderstands-Verzögerungsdaten an dem Weltraumobjekt (200), an dem die Weltraumobjektbake (100) befestigt ist.

10. Weltraumobjektbake (100) gemäss Anspruch 8 oder 9, wobei der Mikroprozessor so konfiguriert ist, dass er Geschwindigkeit, Position und Ausrichtung der Weltraumobjektbake über die Zeit bestimmt.

11. Weltraumobjektbake (100) gemäss einem der Ansprüche 1 bis 10, das einen GNSS-Empfänger umfasst und bei dem der Mikroprozessor (102) so konfiguriert ist, dass er die Position und Ausrichtung des Weltraumobjekt-Bakens (100) im Weltraum auf der Grundlage empfangener GNSS-Signale bestimmt.

## Revendications

1. Balise pour objet spatial (100) destinée à être placée sur un objet spatial (200), comprenant une alimentation électrique (101), un microprocesseur (102), une mémoire (103) et une antenne (104), comprenant en outre au moins un capteur de détection de mouvement de rotation (110) fournissant des données d'orientation pour déterminer la vitesse de rotation actuelle dudit objet spatial (200), des capteurs de détection à courte portée et/ou des moyens de réception de données de position et de mouvement par rapport à un autre objet spatial (600) en approche, se dirigeant éventuellement sur une trajectoire de collision, **caractérisé en ce que** la balise pour objet spatial comprend une unité de propulsion (112) destinée à modifier soit l'orientation, soit la vitesse de rotation, soit l'orbite, soit une combinaison de celles-ci, de l'objet spatial auquel elle est fixée, dans laquelle la balise pour objet spatial (100) est configurée pour déterminer si une telle collision entre l'objet spatial (200) et l'autre objet spatial (600) est à prévoir et pour calculer une trajectoire d'évitement de collision pour l'objet spatial (200) auquel elle est fixée, et pour commander l'au moins une unité de propulsion (112) afin de diriger l'objet spatial (200) sur ladite trajectoire d'évitement de collision.

2. La balise pour objet spatial (100) selon la revendication 1, dans laquelle le microprocesseur (102) est configuré pour calculer la vitesse de rotation actuelle dudit objet spatial (200) sur la base des données d'orientation provenant du capteur de détection de mouvement de rotation (110) et dans laquelle la balise pour objet spatial (100) comprend un émetteur (122) configuré pour transmettre la vitesse de rotation déterminée dudit objet spatial (200) à une station au sol (300 ; 301, 302).

3. La balise pour objet spatial (100) selon la revendication 1, dans laquelle le microprocesseur est configuré pour compiler les données d'orientation provenant de l'au moins un capteur de détection de mouvement de rotation (110) et dans laquelle la balise pour objet spatial (100) comprend un émetteur (122) configuré pour transmettre les données d'orientation compilées relatives à ladite vitesse de rotation dudit objet spatial (200) à une station au sol (300 ; 301, 302).

4. La balise pour objet spatial (100) selon la revendication 2 ou 3, dans laquelle les mesures du capteur de détection de mouvement de rotation (110) peuvent être commandées par l'intermédiaire d'un récepteur (121).

5. La balise pour objet spatial (100) selon la revendication 4, dans laquelle le récepteur (121) et l'émetteur (122) de l'émetteur-récepteur (120) fonctionnent par radiofréquence ou par transfert de signaux lumineux.

6. La balise pour objet spatial (100) selon la revendication 2 ou 3, dans laquelle le capteur de détection de mouvement de rotation (110) est configuré pour effectuer des mesures périodiques et le microprocesseur est configuré pour recevoir des signaux relatifs auxdites mesures provenant du capteur de détection de mouvement de rotation (110) afin soit de les transmettre à une station au sol (300) sur demande via un signal de demande reçu d'une station au sol (300), soit de les stocker en vue d'une transmission ultérieure prévue périodiquement vers une station au sol (300).

7. La balise pour objet spatial (100) selon l'une quelconque des revendications 1 à 6, dans laquelle la balise pour objet spatial (100) est configurée pour effectuer la communication avec une station au sol (300) via un satellite relais (303).

8. La balise pour objet spatial (100) selon l'une quelconque des revendications 1 à 7, comprenant en outre une caméra (111) et dans laquelle le microprocesseur (102) et la mémoire (103) sont configurés en tant que suiveur d'étoiles pour déterminer la position et l'orientation de la balise pour objet spatial (100) dans l'espace.

9. La balise pour objet spatial (100) selon l'une quelconque des revendications 1 à 8, comprenant un capteur accéléromètre (113) destiné à déterminer des informations de décélération relatives à la balise pour objet spatial (100), en particulier pour calculer des données de décélération dues à la traînée aérodynamique sur l'objet spatial (200) auquel la balise pour objet spatial (100) est fixée.

10. La balise pour objet spatial (100) selon la revendication 8 ou 9, dans laquelle le microprocesseur est configuré pour déterminer la vitesse, la position et l'orientation de la balise pour objet spatial au fil du temps.

11. La balise pour objet spatial (100) selon l'une quelconque des revendications 1 à 10, comprenant un récepteur GNSS et dans laquelle le microprocesseur (102) est configuré pour déterminer la position et l'orientation de la balise pour objet spatial (100) dans l'espace sur la base des signaux GNSS reçus.
